# EUROPEAN PATENT APPLICATION

(11) **EP 3 273 581 A1**
(43) Date of publication of application: **24.01.2018**
(21) Application number: 17181265.4
(22) Date of filing: 13.07.2017
(51) Int. Cl.: H02K 29/03, H02K 1/27

(54) **ROTOR OF PERMANENT MAGNET MOTOR**

(30) Priority: 18.07.2016 KR 20160090787
(71) Applicant: Higenmotor Co., Ltd., Seongsan-gu Changwon-si, Gyeongsangnam-do 51555 (KR)
(72) Inventor: PARK, Byung Sup, 51499 Gyeongsangnam-do (KR)
(74) Representative: J A Kemp

(57) **Abstract**

Provided is a rotor of a permanent magnet motor including a rotor provided inside a stator configured to form a magnetic field by a winding of a coil, and a permanent magnet provided in the rotor, wherein an outer circumferential surface of the rotor is formed such that a size of an air gap between the stator and the rotor varies.

## Description

One or more example embodiments relate to a rotor of a permanent magnet motor.

An embedded-type permanent magnet motor including a permanent magnet of a rotor, the rotor rotating based on a torque from a magnetic force generated by a permanent magnet, is generally known technology.

The embedded-type permanent magnet motor uses one of a concentrated winding method and a distributed winding method based on a winding method of a coil. A motor that uses the concentrated winding method may reduce an amount of copper loss and be more productive compared to a motor that uses the distributed winding method. However, the motor that uses the concentrated winding method may generate significantly more vibration and noise due to an increase in torque ripple compared the motor that uses the distributed winding method.

The related embedded-type permanent magnet motor includes a stator in a cylindrical form and a rotatable rotor included in the stator, and a permanent magnet that rotates with the rotor is included in the rotor.

In addition, an air gap is formed between the stator and the rotor such that a rotating magnetic field is formed through the air gap.

For the permanent magnet motor, it is significant to maintain a sinusoidal magnetic flux generated by the rotor. As long as the sinusoidal magnetic flux is maintained, high current efficiency is maintained, torque linearity is maintained, and torque ripple is reduced.

That is, an efficiency of the permanent magnet motor increases as a magnetic flux generated by the rotor has a form similar to that of a continuous sine curve.

In particular, because the magnetic flux of the rotor suddenly changes at an end of a magnetic pole, various methods for sustaining the sinusoidal magnetic flux generated by the rotor have been proposed. The methods include a method of laminating layers of magnet or a method of disposing a magnetic pole of the magnet to be lower than a center.

However, because cost increases as the amount of magnetic material used increases, and a feature may change depending on a difference between magnet reluctances, and due to alternation with a stator slot, it is difficult to achieve proximity between a form of magnetic force change caused by rotation of the rotor and a form of sine wave.

Thus, a technology for preventing a sudden change in the permanent motor and a generator and maintaining a distribution of magnetic lines of force to be sinusoidal may be needed.

Accordingly, Korean Patent Application No. 10-2003-0050708 discloses an embedded-type permanent magnet motor for enhancing a shape of a magnet embedded in a rotor and equalizing a distribution of magnetic flux density in an air gap between a stator and the rotor.

An aspect provides a rotor of permanent magnet motor for maintaining a sinusoidal form of a magnetic flux by varying a size of an air gap between a rotor and a stator based on a position of a permanent magnet.

Another aspect also provides a rotor of permanent magnet motor for concentrating a magnetic flux on a center of a permanent magnet by providing a magnetic shield between the permanent magnet and an outer circumferential surface of a rotor.

Still another aspect also provides a rotor of permanent magnet motor for maintaining a sinusoidal form of a magnetic flux by providing a plurality of magnetic shields and concentrating the magnetic flux of a permanent magnet on a point by a form and an angle of each of the magnetic shields.

Further aspect also provides a rotor of permanent magnet motor for minimizing an amount of magnetic force leaked from a rotor.

According to an aspect, there is provided a rotor of a permanent magnet motor including a rotor provided inside a stator configured to form a magnetic field by a winding of a coil, and a permanent magnet provided in the rotor, wherein an outer circumferential surface of the rotor is formed such that a size of an air gap between the stator and the rotor varies.

The outer circumferential surface of the rotor may be formed such that a size of the air gap increases from a center of the permanent magnet toward a magnetic pole of the permanent magnet.

The rotor of the permanent magnet motor may further include a magnetic shield provided on a surface of the rotor, the magnetic shield positioned between the outer circumferential surface of the rotor and the permanent magnet.

A plurality of magnetic shields may be provided, and the magnetic shields may be disposed symmetrically based on a center of the permanent magnet.

The magnetic shields may be slanted at a predetermined angle such that a magnetic flux of the permanent magnet is concentrated on the surface of the rotor.

The magnetic shields may be disposed such that the magnetic flux of the permanent magnet faces a point on a magnetic flux center line outside the rotor.

Widths of the magnetic shields may be greater than widths of other magnetic shields close to the center of the permanent magnet as the magnetic shield is close to a magnetic pole of the permanent magnet.

At least one of the magnetic shields may be diamagnetic.

The magnetic shield may be a slot provided on the surface of the rotor, and the slot may be extended to the outer circumferential surface of the rotor.

A plurality of magnetic shields may be provided, and the magnetic shields may be disposed asymmetrically based on the center of the permanent magnet to reduce an interference with a slot of the stator.

Additional aspects of example embodiments will be set forth in part in the description which follows and, in part, will be apparent from the description, or may be learned by practice of the disclosure.

These and/or other aspects, features, and advantages of the invention will become apparent and more readily appreciated from the following description of example embodiments, taken in conjunction with the accompanying drawings of which:
FIG. 1 is a diagram illustrating a rotor of a permanent magnet motor according to an example embodiment;
FIG. 2 is a diagram illustrating a rotor of a permanent magnet motor including a plurality of magnetic shields according to an example embodiment;
FIG. 3 is a diagram illustrating a rotor of a permanent magnet motor in which a plurality of magnetic shields allow a magnetic flux to be concentrated according to an example embodiment;
FIG. 4 is a diagram illustrating a rotor of a permanent magnet motor in which a plurality of magnetic shields are extended to an outer circumferential surface of a rotor according to an example embodiment;
FIG. 5 is a diagram illustrating a rotor of a permanent magnet motor in which a plurality of magnetic shields are disposed asymmetrically according to an example embodiment;
FIG. 6A illustrates a magnetomotive force of a magnet in a square waveform; and
FIG. 6B illustrates a magnetomotive force of a magnet in a sine waveform.

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Terms such as first, second, A, B, (a), (b), and the like may be used herein to describe components. Each of these terminologies is not used to define an essence, order or sequence of a corresponding component but used merely to distinguish the corresponding component from other component(s). For example, a first component may be referred to a second component, and similarly the second component may also be referred to as the first component.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, examples are described in detail with reference to the accompanying drawings. Like reference numerals in the drawings denote like elements, and a known function or configuration will be omitted herein.

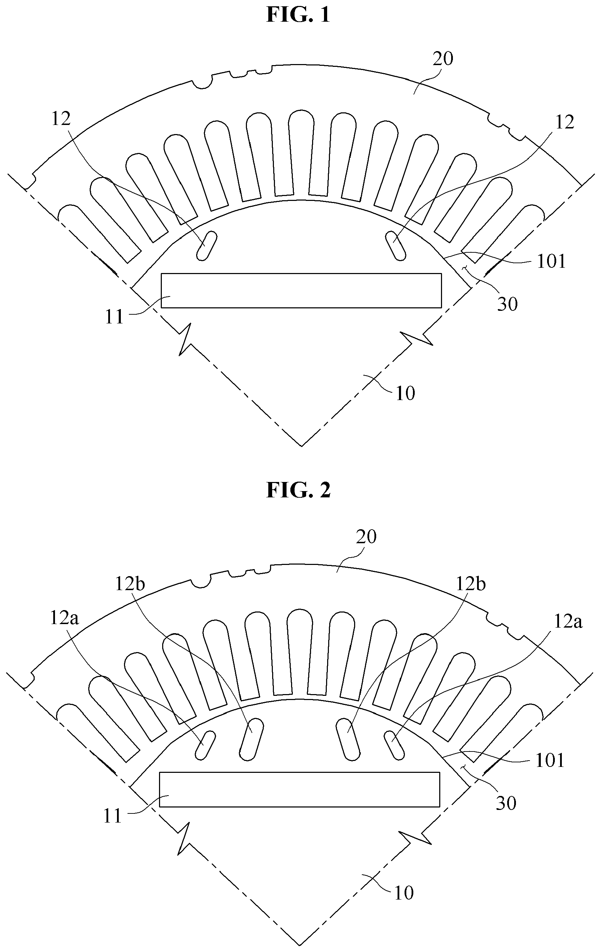

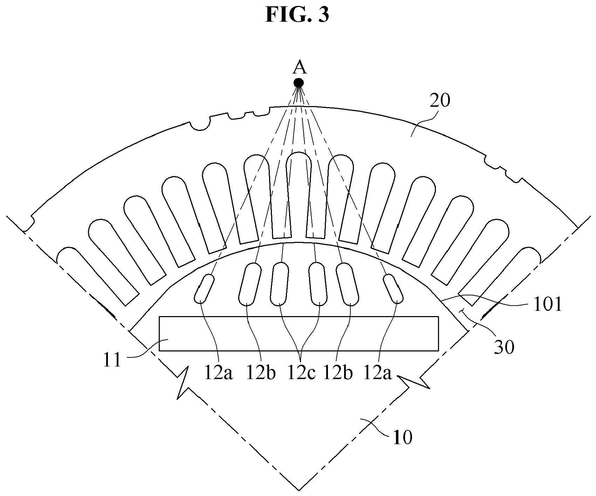

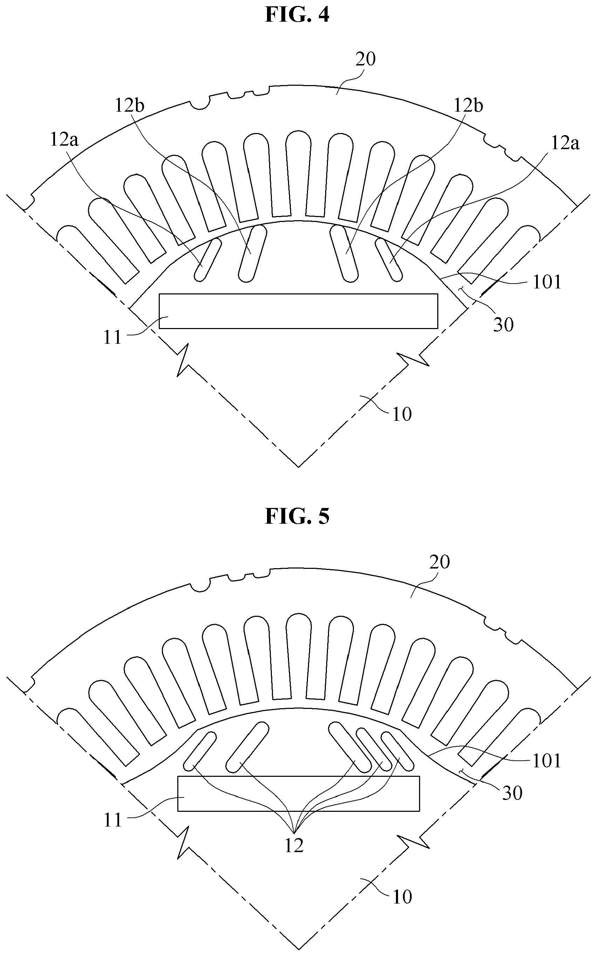

FIG. 1 illustrates a structure in which an air gap 30 between a rotor 10 and a stator 20 of a permanent magnet motor is formed differently depending on a position of the stator 20, FIG. 2 illustrates a structure in which a plurality of magnetic shields 12 provided on a surface of the stator 10 are disposed symmetrically based on a center of a permanent magnet 11. FIG. 3 illustrates a structure in which the magnetic shields 12 are disposed such that lines of magnetic force are concentrated at a predetermined point, and FIG. 4 illustrates a structure in which the magnetic shields 12 are extended to an outer circumferential surface of the rotor 10. FIG. 5 illustrates a structure in which the magnetic shields 12 are disposed asymmetrically.

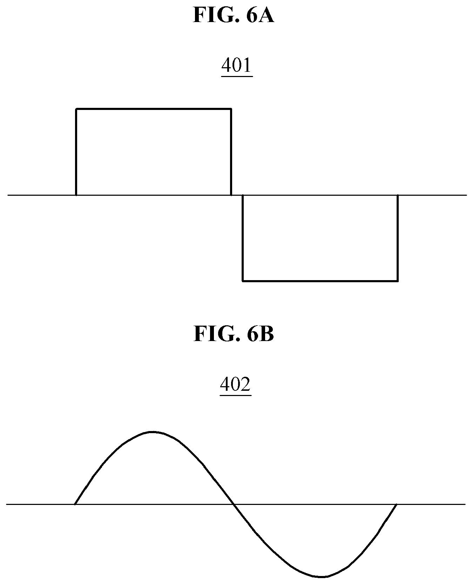

FIG. 6A illustrates a magnetomotive force distribution of the permanent magnet 11 in a square waveform 401, and FIG. 6B illustrates a magnetomotive force distribution of the permanent magnet 11 in a sine waveform.

Description of a structure of the permanent magnet motor is provided for describing the rotor 10 of the permanent magnet motor.

The permanent magnet motor includes the stator 20 and the rotor 10 including the permanent magnet 11.

The rotor 10 and the stator 20 are disposed between the air gap 30 based on a direction of a rotation axis of the permanent magnet motor. The stator 20 may be provided in a cylindrical form having a hollow, and the hollow of the stator 20 allows a shaft (not shown) fixed on the rotation axis of the rotor 10 to pass through the hollow of the stator 20.

The stator 20 may include teeth formed along a circumferential direction on a surface of the stator 20 toward the rotor 10, and slots may be formed between the teeth.

A coil may be winded around each of the teeth of the stator 20, and the stator 20 may generate a rotating magnetic field for a rotation of the rotor 10 when a current flows through the coils of the stator 20. In this case, stators, for example, the stator 20, may be provided in a pair having an identical form.

The rotor 10 is inserted into the hollow of the stator 20 and rotates based on the rotation axis. In this case, the air gap 30 is provided between the rotor 10 and the stator 20, and the air gap 30 allows the rotor 10 to rotate without contacting the stator 20.

Referring to FIGS. 1 through 5, the rotor 10 of the permanent magnet motor includes the permanent magnet 11. A slot for the permanent magnet 11 may be formed on a surface of the rotor 10, and the permanent magnet 11 may be embedded in the slot so as to be included in the rotor 10 of the permanent magnet motor.

A plurality of permanent magnets, for example, the permanent magnet 11, may be provided in the rotor 10, and the permanent magnets may be disposed symmetrically based on a central axis of the rotor 10. That is, when the current flows to the stator 20, the stator 20 may form the rotating magnetic field of the rotor 10 and the permanent magnets may rotate by the rotating magnetic field of the rotor 10.

Hereinafter, detailed description about the rotor 10 of the permanent magnet motor is provided based on a portion of the rotor 10 including one permanent magnet 11. That is, the description of a structure of the rotor 10 based on one permanent magnet 11 is provided, and such structure of the rotor 10 may be applicable to all structures of the rotor 10 including other permanent magnets.

The permanent magnet 11 provided in the rotor 10 generates lines of magnetic force. In this case, the lines of magnetic force come from one side (north pole) of the permanent magnet 11 to another side (south pole) of the permanent magnet 11.

In addition, a density of the lines of magnetic force may be greatest in magnetic poles of the permanent magnet 11, and the density may decrease toward the center of the permanent magnet 11. Thus, as illustrated in FIG. 6A, the magnetomotive force distribution of the permanent magnet 11 has the square waveform 401. That is, a magnetomotive force suddenly changes based on the center of the permanent magnet 11.

An outer circumferential surface 101 of the rotor 10 of the permanent magnet motor may be provided such that a size of the air gap 30 between the rotor 10 and the stator 20 varies depending on a position of the permanent magnet 11.

For example, a distance between the rotation axis and the outer circumferential surface 101 of the rotor 10 of the permanent magnet motor decreases from the center of the permanent magnet 11 toward the magnetic pole of the permanent magnet 11. That is, the size of the air gap 30 between the rotor 10 and the stator 20 increases from the center of the permanent magnet 11 toward the magnetic pole of the permanent magnet 11.

Because a magnetic permeability of the air gap 30 is lower than that of the rotor 10, the lines of magnetic force may be concentrated on the center of the permanent magnet 11. Thus, the magnetomotive force distribution of the permanent magnet 11 is likely to have the sine waveform 402.

A form of the outer circumferential surface 101 of the rotor 10 may vary depending on a size and the position of the permanent magnet 11 provided in the rotor 10, and arrangement, sizes, and shapes of the magnetic shields 12 to be described below.

That is, the form of the magnetomotive force distribution may vary depending on the size and the position of the permanent magnet 11, and the form of the distribution of lines of magnetic force varies depending on the arrangement, sizes, and shapes of the magnetic shields 12. Thus, the outer circumferential surface 101 may be differently formed such that the magnetomotive force distribution of the permanent magnet 11 has a form similar to the sine waveform 402.

The outer circumferential surface 101 may be formed symmetrically based on the center of the permanent magnet 11. That is, the air gap 30 between the rotor 10 and the stator 20 may be formed symmetrically from the center of the permanent magnet 11 toward each magnetic pole. Thus, the lines of magnetic force may be concentrated on the center of the permanent magnet 11 such that the magnetomotive force distribution of the permanent magnet 11 has a form similar to the sine waveform 402.

The form of the magnetomotive force distribution of the permanent magnet 11 is sinusoidal thereby reducing pulsation of a rotation force and increasing a torque linearity compared to a current.

The magnetic shields 12 may be provided in the rotor 10. The magnetic shields 12 may be provided on the surface of the rotor 10. The magnetic shields 12 may be disposed between the outer circumferential surface 101 of the rotor 10 facing the stator 20 and the permanent magnet 11.

The magnetic shields 12 disposed on the surface of the rotor 10 may prevent the lines of magnetic force from passing through points at which the magnetic shields 12 are disposed and may allow the lines of magnetic force to be concentrated at points at which the magnetic shields 12 are not disposed.

In addition, the plurality of magnetic shields 12 may be disposed symmetrically based on the center of the permanent magnet 11. For example, as illustrated in FIGS. 2 through 4, the magnetic shields 12 may be disposed symmetrically from the center of the permanent magnet 11 toward each magnetic pole.

In this case, the magnetic shields 12 may be slanted at a predetermined angle toward the center of the permanent magnet 11. That is, based on the center of the permanent magnet 11 of FIG. 3, the magnetic shields 12 disposed on a left side may be slanted at a predetermined angle to the right, and the magnetic shields 12 disposed on a right side may be slanted at a predetermined angle to the left.

However, the magnetic shields 12 may be also disposed based on the center of the permanent magnet 11 without being slanted at the predetermined angle.

Angles at which the magnetic shields 12 are slanted may vary. For example, the magnetic shields 12 may be slanted such that respective extended center lines of the magnetic shields 12 are concentrated at a point A as illustrated in FIG. 3.

In this case, when the point A is connected to the center of the permanent magnet 11, the point A is perpendicular to a longitudinal direction of the permanent magnet 11. That is, the magnetic shields 12 allow the lines of magnetic force of the permanent magnet 11 to be concentrated on the center of the permanent magnet 11, thereby preventing a loss of the lines of magnetic force and performing smoothing on a magnetic flux such that the magnetomotive force distribution of the permanent magnet 11 has a form similar to the sine waveform 402.

Also, the magnetic flux may be concentrated at one point by allowing a path of the lines of magnetic force of the permanent magnet 11 to pass through the magnetic shields 12, and efficiency may be enhanced based on a rotation torque of the rotor 10.

Also, a distance between the point A and the center of the permanent magnet 11 may vary. The point A may be positioned outside the stator 20 and may be also positioned inside the stator 20. That is, the angles at which the magnetic shields 12 are slanted may vary depending on a position of the point A. Also, the magnetic flux may be concentrated at a predetermined point based on arrangement of the magnetic shields 12.

The magnetic shields 12 may have various forms. For example, each of the magnetic shields 12 has a rectangular form as illustrated in FIGS. 1 through 4. However, the forms of the magnetic shields 12 are not limited to the rectangular form. Each of the magnetic shields 12 may have a form of a square or a form in which a neighboring portion has a fillet shape.

A size and a form of each of the magnetic shields 12 may vary. For example, when the magnetic shields 12 are disposed symmetrically based on the center of the permanent magnet 11, widths of the magnetic shields 12 close to the magnetic pole of the permanent magnet 11 may be greater than widths of the magnetic shields 12 relatively close to the center of the permanent magnet 11.

Because distances between the outer circumferential surface 101 of the rotor 10 and portions of the permanent magnet 11 are different to each other, lengths of the magnetic shields 12 may vary. For example, because a distance between the permanent magnet 11 and the outer circumferential surface 101 decreases from the center toward the magnetic pole of the permanent magnet 11, the lengths of the magnetic shields 12 close to the center of the permanent magnet 11 may be greater than the lengths of the magnetic shields 12 close to the magnetic pole of the permanent magnet 11.

That is, the lines of magnetic force are formed based on the center of the permanent magnet 11 and the magnetomotive force distribution varies depending on each position of the permanent magnet 11, the loss of magnetic flux may be prevented through the magnetic shields 12 of which the lengths are relatively great on the center of the permanent magnet 11 having a relatively weak magnetic flux.

The magnetic flux of the magnetic pole may be weakened and the magnetomotive force distribution of the permanent magnet 11 may have a form similar to the sine waveform 402 by using the magnetic shields 12 of which the lengths are relatively short at the magnetic pole of the permanent magnet 11.

However, the magnetic shields 12 may be disposed asymmetrically based on the center of the permanent magnet 11. For example, at least three, an odd number, of the magnetic shields 12 may be provided. Also, five or seven magnetic shields 12 may be provided.

For example, when three magnetic shields 12 are provided, two magnetic shields 12 may be disposed symmetrically based on the center of the permanent magnet 11 and the other one magnetic shield may be disposed at any one of two magnetic poles of the permanent magnet 11 thereby performing smoothing on the magnetic flux of the permanent magnet 11.

Various methods by which the magnetic shields 12 allow the magnetic flux of the permanent magnet 11 to be concentrated and allow the magnetomotive force distribution of the permanent magnet 11 to have a form similar to the sine waveform 402 may be used. For example, the magnetic shields 12 may be diamagnetic, for example, copper, silver, or lead having a low relative permeability.

In this case, the magnetic shields 12 may be magnetized in an opposite direction of the magnetic field such that the path of the lines of magnetic force may be blocked and the lines of the magnetic force may be introduce to a predetermined point and thus, the magnetic flux may be concentrated at the predetermined point.

The magnetic shields 12 may be slots provided on the surface of the rotor 10. In this case, the magnetic shields 12 may perform a role of introducing the path of the lines of magnetic force formed around the permanent magnet 11 through the slots.

As illustrated in FIG. 5, the slots provided on the surface of the rotor 10 may be extended to the outer circumferential surface 101 of the rotor 10 facing the stator 20 such that the lines of magnetic force are more effectively concentrated. Although not illustrated, the slots may be extended to the permanent magnet 11 included in the rotor 10.

As the magnetic shields 12 are provided based on the center of the permanent magnet 11, the magnetomotive force distribution of the permanent magnet 11 may have the form similar to the sine waveform 402.

Based on the above-described examples of the rotor 10 of the permanent magnet motor, the size of the air gap 30 between the rotor 10 and the stator 20 varies depending on the position of the permanent magnet 11 and the magnetic shields 12 are provided, such that the magnetomotive force distribution of the permanent magnet 11 may have the form similar to the sine waveform 402.

As the magnetomotive force distribution of the permanent magnet 11 has the form similar to the sine waveform 402, the magnetic flux occurring in the rotor 10 may be prevented from having a sudden change.

In addition, a torque ripple may be prevented by reducing reluctance occurring by alternation of slots of the stator 20 and the permanent magnet 11, and the efficiency of the motor may increase by reducing a calking torque.

In addition, a magnetic leakage may be minimized by allowing the lines of magnetic force of the permanent magnet 11 to be concentrated at the predetermined point through the magnetic shields 12.

That is, a more number of lines of magnetic force may be concentrated on the center of the permanent magnet 11 based on the form of the air gap 30, and an efficiency of concentrating the magnetic flux may be enhanced through the magnetic shields 12.

According to example embodiments described herein, a rotor of a permanent magnet motor may prevent a sudden change of a magnetic flux occurring in the rotor.

According to example embodiments described herein, a rotor of a permanent magnet motor may maintain a linearity in a torque by maximally securing a sinusoidal magnetic flux.

According to example embodiments described herein, a rotor of a permanent magnet motor may minimize a magnetic force leakage by allowing a magnetic flux occurring in a permanent magnet to be concentrated at a point.

An effect of a rotor of a permanent magnet motor is not limited to the descriptions provided above, and other effects not mentioned may be clearly understood by those skilled in the art.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A rotor of a permanent magnet motor comprising:
a rotor provided inside a stator configured to form a magnetic field by a winding of a coil; and
a permanent magnet provided in the rotor,
wherein an outer circumferential surface of the rotor is formed such that a size of an air gap between the stator and the rotor varies.

2. The rotor of the permanent magnet motor of claim 1, wherein the outer circumferential surface of the rotor is formed such that a size of the air gap increases from a center of the permanent magnet toward a magnetic pole of the permanent magnet.

3. The rotor of the permanent magnet motor of claim 2, further comprising:
a magnetic shield provided on a surface of the rotor, the magnetic shield positioned between the outer circumferential surface of the rotor and the permanent magnet.

4. The rotor of the permanent magnet motor of claim 3, wherein a plurality of magnetic shields are provided, and the magnetic shields are disposed symmetrically based on a center of the permanent magnet.

5. The rotor of the permanent magnet motor of claim 4, wherein the magnetic shields are slanted at a predetermined angle such that a magnetic flux of the permanent magnet is concentrated on the surface of the rotor.

6. The rotor of the permanent magnet motor of claim 5, wherein the magnetic shields are disposed such that the magnetic flux of the permanent magnet faces a point on a magnetic flux center line outside the rotor.

7. The rotor of the permanent magnet motor of claim 4 or 5, wherein widths of the magnetic shields are greater than widths of other magnetic shields close to the center of the permanent magnet as the magnetic shield is close to a magnetic pole of the permanent magnet.

8. The rotor of the permanent magnet motor of any one of claims 4 to 7, wherein at least one of the magnetic shields is diamagnetic.

9. The rotor of the permanent magnet motor of any one of claims 3 to 8, wherein the magnetic shield is a slot provided on the surface of the rotor, and the slot is extended to the outer circumferential surface of the rotor.

10. The rotor of the permanent magnet motor of any one of claims 3 to 8, wherein a plurality of magnetic shields are provided, and the magnetic shields are disposed asymmetrically based on the center of the permanent magnet to reduce an interference with a slot of the stator.
